Europäisches Patentamt

European Patent Office

Office européen des brevets

(19)

(11) Numéro de publication: **0 322 286**
**B1**

(12) **FASCICULE DE BREVET EUROPEEN**

(45) Date de publication du fascicule du brevet: **23.01.91**

(51) Int. Cl.⁵: **B 60 R 13/06**

(21) Numéro de dépôt: **88403200.4**

(22) Date de dépôt: **15.12.88**

(54) **Nouveau profilé formant pince pour joints d'étanchéité d'automobile.**

(30) Priorité: **23.12.87 FR 8718032**
**01.08.88 FR 8810376**

(43) Date de publication de la demande:
**28.06.89 Bulletin 89/26**

(45) Mention de la délivrance du brevet:
**23.01.91 Bulletin 91/04**

(84) Etats contractants désignés:
**AT BE CH DE ES GB IT LI LU NL SE**

(56) Documents cités:
**DE-A-3 309 776**
**FR-A-2 550 843**
**US-A-3 438 150**

(73) Titulaire: **ETABLISSEMENTS MESNEL SOCIETE**
**ANONYME DITE:**
**9 et 11, Rue de la Rivière**
**F-78420 Carrières-Sur-Seine (FR)**

(72) Inventeur: **Mesnel, Gérard**
**17, Rue Victor Hugo**
**F-78420 Carrieres sur Seine (FR)**

(74) Mandataire: **Jolly, Jean-Pierre et al**
**Cabinet BROT et JOLLY 83, rue d'Amsterdam**
**F-75008 Paris (FR)**

EP 0 322 286 B1

Courier Press, Leamington Spa, England.

**Description**

La présente invention concerne un nouveau profilé formant pince pour joints d'étanchéité d'automobile (Du type divulgué, par exemple, par DE-A-3 309 776).

On sait que ces joints comprennent usuellement, d'une part, un profilé formant pince, apte à coiffer une partie en saillie ou une feuillure de la carrosserie et, d'autre part, un élément d'étanchéité proprement dit, comprenant, par exemple, une lèvre d'étanchéité et/ou une partie tubulaire destinée à être pincée entre un encadrement de porte et la porte associée.

Le profilé formant pince comprend habituellement une âme métallique longitudinale à section en U, gainée d'une matière plastique telle que le polychlorure de vinyle plastifié, qui a été extrudée sur l'âme métallique. Sur les faces des branches en U disposées en vis-à-vis, la matière plastique comporte des parties en saillie telles que des lèvres inclinées vers la base du U, qui s'escamotent lors de la mise en place de la partie formant pince sur le bord saillant de la feuillure associée de la carrosserie et qui s'opposent à une désolidarisation accidentelle de cette partie formant pince.

Ces profilés sont toutefois soumis à de très fortes contraintes (contre-pression exercée par la feuillure sur laquelle ils sont fixés) et sont en outre exposés en permanence aux intempéries et/ou au soleil. Or il est bien connu que le métal d'une carrosserie d'automobile immobilisée pendant de nombreuses heures au grand soleil, en plein été, peut atteindre une température très élevée. Dans de telles conditions thermiques, la matière plastique peut devenir au moins partiellement thermoplastique, et des déformations permanentes du profilé formant pince peuvent se produire au niveau de la feuillure qu'il coiffe, avec pour conséquence une désolidarisation de ce profilé et de la feuillure associée et un risque de basculement du joint d'étanchéité.

Pour remédier à ce grave inconvénient, on a certes proposé d'utiliser des compositions de polychrorure de vinyle améliorées, mais, outre le fait que de telles compositions sont beaucoup plus coûteuses que le PCV usuel, on n'a pas encore mis au point des compositions de matière plastique présentant les qualités requises pour ce type d'application et aptes à résister aux conditions de température que l'on rencontre fréquemment sur des automobiles exposées au soleil au milieu de l'été.

La présente invention vise à éviter ces inconvénients en substituant aux lèvres prévues sur au moins l'une des branches du U du profilé formant pince une partie tubulaire appelée, elle aussi, à venir latéralement au contact de la feuillure de la carrosserie coiffée par ladite pince, et en insérant à l'intérieur de cette partie tubulaire un élément de renfort apte à exercer une contrepression constante sur la paroi de la partie tubulaire en contact avec ladite feuillure.

L'invention a par conséquent pour objet un profilé formant pince pour joint d'étanchéité d'automobile, ce profilé étant appelé à coiffer un élément saillant de la carrosserie et comprenant une âme métallique longitudinale à section en U gainée d'une manière plastique qui présente, sur les faces du U se faisant vis-à-vis, des parties en saillie destinées à venir au contact des faces latérales dudit élément saillant de la carrosserie (profilé du type divulgué, par exemple, dans DE-A-3 309 776), ledit profilé étant caractérisé en ce que, sur au moins l'une des dites faces du U, une partie en saillie est constituée par un élément tubulaire à l'intérieur duquel est logé au moins un organe de renfort longitudinal apte à exercer une contre-pression constante sur la face interne de la paroi dudit élément tubulaire appelée à venir en contact, par sa face externe, avec ledit élément saillant de la carrosserie.

Les joints d'étanchéité comprenant un tel profilé formant pince constituent un autre objet de l'invention.

Du fait de la contre-pression exercée par l'organe de renfort, la matière plastique du profilé ne subira pas de déformation permanente au contact de la partie saillante de la carrosserie, même lorsque celle-ci, à la suite d'une exposition prolongée au soleil, atteindra une température très élevée, et le joint comprenant un tel profilé ne risquera plus de se désolidariser du support de la pince.

Le renfort interne de l'élément tubulaire du profilé pourra être réalisé sous diverses formes et en divers matériaux que l'homme de l'art pourra choisir suivant les effets désirés.

Dans une première forme de réalisation de l'invention, ce renfort interne pourra, par exemple, être constitué d'un élément cylindrique et, de préférence, tubulaire, de section quelconque, en un matériau présentant une résistance élevée à la déformation permanente à la chaleur, par exemple en un élastomère tel que le caoutchouc ou un silicone. Avantageusement, l'organe de renfort sera réalisé sous la forme d'un tube extrudé en un élastomère comprenant un additif de vulcanisation, de manière qu'au cours de l'extrusion, cet élastomère se vulcanise simultanément. Cet élément de renfort pourra être réalisé séparément et le profilé avec sa partie tubulaire sera ensuite extrudé simultanément sur l'armature métallique et autour de l'élément de renfort.

Dans une seconde forme de réalisation, présentant une résistance accrue à la déformation permanente, l'organe de renfort sera constitué par une matière élastomère expansée, réticulée ou thermoplastique, présentant de bonnes qualités de résilience et de résistance à la déformation permanente aux températures normales d'utilisation, qui emplit ledit élément tubulaire et a été expansée à l'intérieur de celui-ci.

Parmi les matières élastomères expansées susceptibles d'être utilisées dans cette forme de réalisation, on mentionnera, sans que cette liste soit limitative, les polymères blocs aptes à réticuler en présence de quelques ppm d'humidité, comme par exemple le produit commercialisé par la Société NORTON sous l'appellation de THERMOFOAM, ou un alliage plastomère élastomère extrudable avec un gaz inerte dissous sous pression pour obtenir l'état cellulaire, cet alliage pouvant être par exemple le TREFSIN, produit commercialisé par la Société EXXON.

On pourra aussi utiliser une mousse de polyuréthane expansée in situ par un procédé connu en soi.

Les dessins annexés illustrent, à titre d'exemple non limitatif, des formes de réalisation d'un profilé pour joint d'étanchéité conforme à l'invention. Sur ces dessins:

La figure 1, est une coupe transversale d'une première forme de réalisation d'un profilé conforme à l'invention;

La figure 2 est une vue analogue du profilé de la figure 1, lorsqu'on l'engage en position d'utilisation sur une feuillure d'une carrosserie d'automobile;

La figure 3 est une vue analogue à la figure 2, illustrant la déformation du renfort de la partie tubulaire du profilé, lorsqu'elle est soumise à une contrainte plus importante, en fin d'engagement du profilé sur la feuillure support;

La figure 4 est une coupe transversale d'une variante de cette forme de réalisation d'un profilé selon l'invention;

La figure 5 illustre cette variante en position d'utilisation sur une feuillure d'une carrosserie d'automobile;

La figure 6 est une coupe transversale d'une troisième forme de réalisation d'un profilé conforme à l'invention;

La figure 7 est une coupe transversale d'une quatrième forme de réalisation d'un profilé selon l'invention.

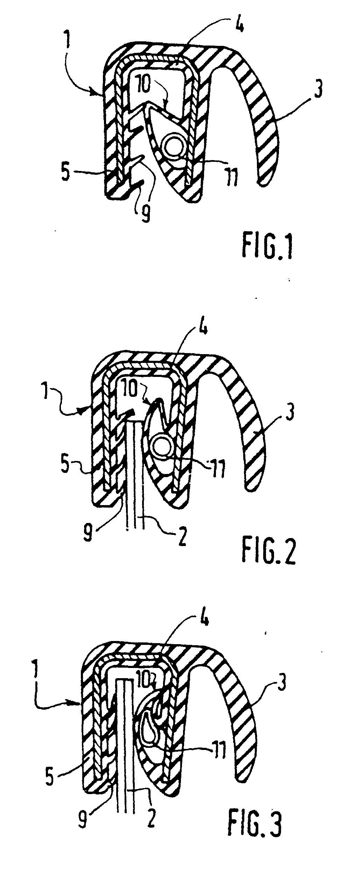

Le profilé représenté sur les figures 1 à 3 comprend, d'une part, une pince 1, destinée à coiffer un bord saillant 2 d'une carrosserie d'automobile au niveau de l'encadrement d'une porte, d'autre part, une lèvre d'étanchéité 3, attenante à la pince 1. Celle-ci comprend, de façon connue, une âme métallique 4, par exemple en aluminium ou en acier, à section en U, gainée d'une couche 5 d'une matière plastique extrudée, telle que le polychlorure de vinyle plastifié, solidaire de la lèvre 3. Un élément d'étanchéité (non représenté) peut être collé contre la couche 5 de matière plastique de la partie formant pince 1 et sur la lèvre 3, pour former avec celleci une lèvre d'étanchéité. L'élément d'étanchéité peutêtre de tout type connu en soi et se limiter par exemple à la lèvre d'étanchéité adhérant à la lèvre 3, ou comprendre une partie tubulaire déformable élastiquement, destinée, par exemple, à être pincée entre un encadrement de porte et la porte associée.

De façon connue, suivant la face interne de l'une des branches du U de la partie formant pince, la couche 5 de matière plastique présente des protubérances formant des petites lèvres 9, inclinées en direction de la base du U et destinées à ancrer la pince 1 sur le bord saillant 2 de la carrosserie, pour éviter qu'elle ne se désolidarise accidentellement de cette partie 2. Habituellement, l'autre branche U comporte également au moins une lèvre de dimensions plus importantes.

Ainsi qu'il a été exposé ci-dessus, la matière plastique 5 est soumise aux contraintes de réaction de la partie 2, laquelle, à la suite d'une longue exposition au soleil par temps chaud, peut atteindre des températures élevées. La matière plastique 5, dans de telles conditions, peut devenir au moins partiellement thermoplastique et se déformer alors de façon permanente, avec pour conséquence un risque grave que la pince 1 acquière un certain jeu par rapport à la partie 2 et que le joint d'étanchéité bascule par rapport à son support.

Pour remédier à cet inconvénient, conformément à l'invention, sur la face interne de 'la branche du U disposée en regard des lèvres 9, la couche 5 de matière plastique est conformée suivant un profil tubulaire 10 en forme de bec, dirigé vers la base du U et dans l'évidement duquel est logé un organe de renfort. Dans le cas présent, cet organe de renfort est constitué par un petit tube 11 en caoutchouc vulcanisé, dont le diamètre est tel que, lorsque la pince 1 est en position sur la partie 2, il exerce une contre-pression contre la face interne de la paroi du bec 10 sollicitée par cette partie 2. Même si cette paroi atteint une température trop élevée ou subit des efforts tels qu'elle risque de se déformer, elle continuera à être sollicitée par le renfort 11 et conservera ainsi sa forme primitive, en maintenant ainsi une contre-pression constante contre les lèvres 9, qui, elles-mêmes, conserveront leur forme initiale.

Comme on le voit sur les dessins, le renfort 11 pourra se déformer plus ou moins suivant les contraintes auxquelles il est soumis, lorsqu'on le met en position d'utilisation sur la feuillure 2. Dans cette position, le renfort 11 pourra prendre appui contre la matière plastique gainant l'armature 4, ou même, éventuellement, directement contre cette armature.

On notera qu'il est possible d'extruder la matière plastique gainant l'armature 4 simultanément autour de celle-ci et du renfort 11, de sorte que le profilé conforme à l'invention peut être réalisé de façon aussi simple que les profilés usuels, en utilisant les moyens connus de la technique.

Bien entendu, un élément tubulaire 10, équipé d'au moins un élément de renfort 11, peut être prévu sur les deux faces internes des branches du U, en assurant ainsi un véritable verrouillage en position du profilé sur la feuillure qui lui sert de support et en supprimant tout risque de basculement de ce profilé.

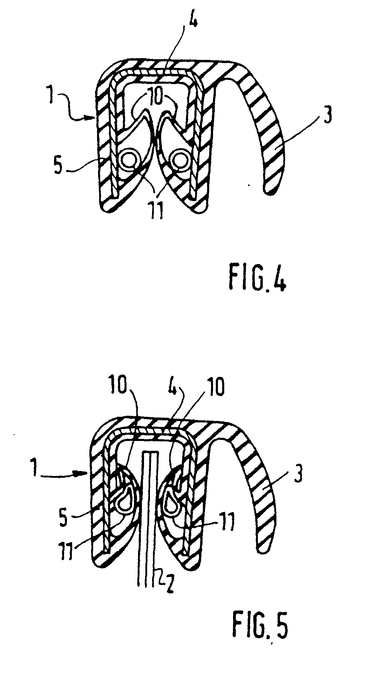

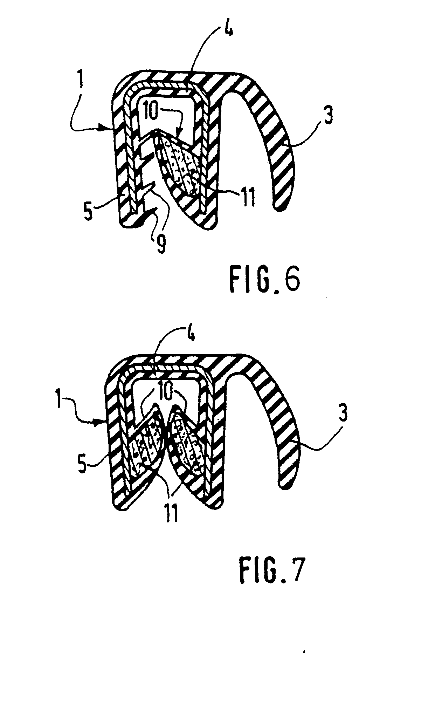

C'est cette variante du profilé conforme à l'invention que représentent les figures 4 et 5 des dessins, sur lesquelles les organes déjà décrits en relation avec les figures 1 à 3 sont désignés par les mêmes chiffres de référence.

Dans cette variante, les petites lèvres 9 ont été supprimées et sont remplacées par un second élément tubulaire 10, équipé d'un renfort tubulaire 11, les deux éléments tubulaires étant disposés symétriquement, en vis-à-vis, sur les faces internes des branches du U de l'armature. Bien entendu, un ou plusieurs becs, disposés symétriquement ou non, peuvent être prévus, suivant les exigences requises du profilé et de son utilisation sur une carrosserie d'automobile.

Les figures 6 et 7 sont à rapprocher, respectivement, des figures 1 et 4 ci-dessus et leur sont en tout point identiques, à l'exception de l'élément de renfort. Les organes identiques y sont désignés par les mêmes chiffres de référence.

Dans cette forme de réalisation, la couche 5 de matière plastique est conformée, sur la surface interne de l'une des branches du U, suivant un profil tubulaire 10 en forme de bec, dirigé vers la base du U et dans l'évidement duquel est logé un organe de renfort 11, constitué par une matière élastomère, expansée in situ à l'intérieur du tube, plastique ou réticulée, mais possédant de bonnes propriétés de résistance à la déformation rémanente aux températures habituelles d'utilisation.

Dans la variante de la figure 7, les petites lèvres 9 sont été supprimées et sont remplacées par un second élément tubulaire 10, symétrique du premier et contenant, comme celui-ci, un élément de renfort 11 constitué par une matière élastomère, expansée in situ à l'intérieur du tube. Comme précédemment, cette matière présente des propriétés satisfaisantes de résistance à la déformation rémanente aux températures usuelles d'utilisation.

**Revendications**

1. Profilé formant pince pour joint d'étanchéité d'automobile, ce profilé étant appelé à coiffer un élément saillant (2) de la carrosserie et comprenant une âme métallique longitudinale (4) à section du U, gainée d'une matière plastique (5), qui présente, sur les faces du U se faisant vis-à-vis, des parties en saillie (9, 10) destinées à venir au contact des faces latérales dudit élément saillant (2) de la carrosserie, ledit profilé étant caractérisé en ce que, sur au moins d'une desdites faces du U, une partie en saillie est constituée par un élément tubulaire (10), à l'intérieur duquel est logé au moins un organe de renfort longitudinal (11), apte à exercer une contre-pression constante sur la face interne de la paroi dudit élément tubulaire (10) appelée à venir en contact, par sa face externe, avec ledit élément saillant (2) de la carrosserie.

2. Profilé selon la revendication 1, caractérisé en ce que ledit élément de renfort (11) est un élément cylindrique de section quelconque.

3. Profilé selon la revendication 1, caractérisé en ce que ledit élément de renfort (11) est tubulaire.

4. Profilé selon l'une des revendications 1 à 3, caractérisé en ce que ledit élément de renfort (11) prend appui, en position d'utilisation, contre la matière plastique gainant l'armature (4) du profil.

5. Profilé selon l'une des revendications 1 à 3, caractérisé en ce que ledit élément de renfort (11) prend appui, en position d'utilisation, contre l'armature (4) du profilé.

6. Profilé selon l'une des revendications 1 à 5, caractérisé en ce que ledit élément de renfort (11) est en un élastomère tel que le caoutchouc ou en silicone.

7. Profilé selon l'une des revendications 1 à 5, caractérisé en ce que ledit élément de renfort (11) est constitué par un tube extrudé en un élastomère comprenant un additif de vulcanisation.

8. Profilé selon l'une des revendications 1 à 7, caractérisé en ce qu'il résulte d'une extrusion simultanée de ladite matière plastique (5) sur l'armature (4) et autour de l'élément de renfort (11).

9. Profilé selon l'une des revendications 1 à 8, caractérisé en ce qu'il comporte sur chacune des faces des branches du U se faisant vis-à-vis un élément tubulaire (10), à l'intérieur duquel est logé au moins un organe de renfort (11).

10. Profilé selon la revendication 1, caractérisé en ce que ledit organe de renfort (11) est constitué par une matière élastomère expansée, réticulée ou thermoplastique, présentant de bonnes qualités de résilience et de résistance à la déformation permanente aux températures normales d'utilisation, qui emplit ledit élément tubulaire (10) et a été expansée à l'intérieur de celui-ci.

11. Profilé selon la revendication 10, caractérisé en ce que ladite matière élastomère expansée appartient au groupe constitué par les mousses de polyuréthane, les polymères aptes à réticuler au contact de l'humidité et les alliages plasto-mères élastomères extrudables avec un gaz inerte dissous sous pression au cours de l'opération de l'extrusion.

12. Joint d'étanchéité comprenant un profilé formant pince selon l'une des revendications 1 à 11.

**Patentansprüche**

1. Klemmprofil für Fahrzeug-Dichtungselement, welches Profil zum Bedecken eines vorspringenden Elements (2) der Karosserie bestimmt ist und einen in Längsrichtung verlaufenden, metallischen Kern (4) mit U-förmigem Querschnitt aufweist, welcher mit einem Kunststoff (5) umhüllt ist und an den einander gegenüberliegenden Flächen des U vorspringende Bereiche (9, 10) aufweist, welche für einen Kontakt mit den Seitenflächen des vorspringenden Elements (2) der Karosserie bestimmt sind, dadurch gekennzeichnet, daß an wenigstens einer der Flächen des U ein vorspringender Bereich von einem rohrförmigen Element (10) gebildet wird, in dessen Inneren wenigstens ein in Längsrichtung verlaufendes Verstärkungsorgan (11) angeordnet ist, welches zur Ausübung eines konstanten Gegendruckes auf die Innenfläche der Wand des rohrförmigen Elements (10) geeignet ist, welche Wand über ihre Außenfläche mit dem vorspringenden Element (2) der Karosserie in Kontakt steht.

2. Profil nach Anspruch 1, dadurch gekennzeichnet, daß das Verstärkungselement (11) ein zylindrisches Element mit beliebigem Querschnitt ist.

3. Profil nach Anspruch 1, dadurch gekennzeichnet, daß das Verstärkungselement (11) rohrförmig ausgebildet ist.

4. Profil nach einem der Ansprüche 1 bis 3, dadurch gekennzeichnet, daß das Verstärkungselement (11) in der Gebrauchsposition am die Armierung (4) des profils umhüllenden Kunststoff anliegt.

5. Profil nach einem der Ansprüche 1 bis 3, dadurch gekennzeichnet, daß das Verstärkungselement (11) in der Gebrauchsposition an der Armierung (4) des profils anliegt.

6. Profil nach einem der Ansprüche 1 bis 5, dadurch gekennzeichnet, daß das Verstärkungselement (11) aus einem Elastomer, wie beispielsweise Kautschuk, oder Silikon besteht.

7. Profil nach einem der Ansprüche 1 bis 5, dadurch gekennzeichnet, daß das Verstärkungselement (11) von einem extrudierten Rohr aus einem einen Vulkanisierzusatz enthaltenden Elastomer gebildet wird.

8. Profil nach einem der Ansprüche 1 bis 7, dadurch gekennzeichnet, daß es durch eine gleichzeitige Extrusion des Kunststoffes (5) auf der Armierung (4) und um das Verstärkungselement (11) hergestellt wird.

9. Profil nach einem der Ansprüche 1 bis 8, dadurch gekennzeichnet, daß es auf jeder der Flächen der einander gegenüberliegenden Schenkel des U ein rohrförmiges Element (10) aufweist, in dessen Inneren wenigstens ein Verstärkungsorgan (11) angeordnet ist.

10. Profil nach Anspruch 1, dadurch gekennzeichnet, daß das Verstärkungsorgan (11) aus einem expandierten, vernetzten oder thermoplastischen elastomeren Material mit guten Elastizitätseigenschaften und guten Widerstandseigenschaften gegenüber permanenter Deformation bei normalen Verwendungstemperaturen gebildet wird, welches Organ das rohrförmige Element (10) ausfüllt und im Inneren desselben expandiert wird.

11. Profil nach Anspruch 10, dadurch gekennzeichnet, daß das expandierte elastomere Material aus der Gruppe umfassend Polyurethan-Schäume, Polymere, welche beim Kontakt mit Feuchtigkeit vernetzen, und plastomere, elastomere und unter Inertgas unter Druck während des Extrusionsvorganges extrudierbare Kunststofflegierungen gewählt wird.

12. Dichtung umfassend ein Klemmprofil nach einem der Ansprüche 1 bis 11.

**Claims**

1. A shaped member forming a clip for a motor vehicle gasket, this shaped member being designed to cover a projecting element (2) of the body-work and comprising a longitudinal metal web (4) with a U-shaped section which is sheathed with a plastics material (5) and has, on the faces of the U facing each other, projecting portions (9, 10) designed to come into contact with the lateral faces of said projecting element (2) of the body-work, said shaped member being characterized in that on at least one of said faces of the U a projecting portion consists of a tubular element (10), inside which there is located at least one longitudinal reinforcing member (11) capable of exerting a constant counterpressure on the internal face of the wall of said tubular element (10) designed to come into contact, via its external face, with said projecting element (2) of the body-work.

2. A shaped member according to claim 1, characterized in that said reinforcing element (11) is a cylindrical element of any cross-section.

3. A shaped member according to claim 1, characterized in that said reinforcing element (11) is, tubular.

4. A shaped member according to any one of claims 1 to 3, characterized in that said reinforcing element (11) rests, in the position of utilisation, against the plastics material sheathing the reinforcemnt (4) of the member.

5. A shaped member according to any one of claims 1 to 3, characterized in that said reinforcing element (11) rests, in the position of utilisation, against the reinforcement (4) of the shaped member.

6. A shaped member according to any one of claims 1 to 5, characterized in that said reinforcing element (11) is of an elastomeric material such as rubber or of silicone.

7. A shaped member according to any one of claims 1 to 5, characterized in that said reinforcing element (11) consists of an extruded tube of an elastomer comprising a vulcanization additive.

8. A shaped member according to any one of claims 1 to 7, characterized in that it results from simultaneous extrusion of said plastics material (5) on the reinforcement (4) and around the reinforcing element (11).

9. A shaped member according to any one of claims 1 to 8, characterized in that it comprises, on each of the faces of the branches of the U facing each other, a tubular element (10) inside which there is located at least one reinforcing member (11).

10. A shaped member according to claim 1, characterized in that said reinforcing member (11) consists of a cross-linked, thermoplastic or expanded elastomeric material having good qualities of resilience and permanent deformation resistance at temperatures at which it is normally used, which material fills said tubular element (10) and has been expanded in the interior thereof.

11. A shaped member according to claim 10, characterized in that said expanded elastomeric material belongs to the group consisting of polyurethane foams, polymers capable of cross-linking on contact with moisture and elastomeric plastomeric alloys extrudable with an inert gas dissolved under pressure during the extrusion operation.

12. A gasket comprising a shaped member forming a clip according to any one of claims 1 to 11.

FIG.1

FIG.2

FIG.3

FIG.4

FIG.5

FIG.6

FIG.7